Europäisches Patentamt

European Patent Office

Office européen des brevets

(19)

(11) Numéro de publication : **0 278 800 B1**

(12) **FASCICULE DE BREVET EUROPEEN**

(45) Date de publication du fascicule du brevet :
17.07.91 Bulletin 91/29

(51) Int. Cl.⁵ : **B23K 9/10**

(21) Numéro de dépôt : **88400056.3**

(22) Date de dépôt : **12.01.88**

(54) **Procédé de soudage semi-automatique commandé à distance de deux pièces symétriques de révolution.**

(30) Priorité : **20.01.87 FR 8700590**

(43) Date de publication de la demande :
**17.08.88 Bulletin 88/33**

(45) Mention de la délivrance du brevet :
**17.07.91 Bulletin 91/29**

(84) Etats contractants désignés :
**BE CH DE ES GB IT LI SE**

(56) Documents cités :
**FR-A- 2 412 380**
**GB-A- 2 173 316**
**PATENT ABSTRACTS OF JAPAN, vol. 10, no.
257 (M-513)[2313], 3 septembre 1986; & JP-
A-61 82 980 (NIPPON KOKAN K.K.) 26-04-1986**

(73) Titulaire : **FRAMATOME
Tour Fiat 1, Place de la Coupole
F-92400 Courbevoie (FR)**

(72) Inventeur : **Gaudin Jean-Paul
3,rue Jacques Brel
F-69680 Chassieu (FR)**

(74) Mandataire : **Bouget, Lucien et al
Cabinet Lavoix 2, Place d'Estienne d'Orves
F-75441 Paris Cédex 09 (FR)**

## Description

L'invention concerne un procédé de soudage semi-automatique commandé à distance, de deux pièces symétriques de révolution de grandes dimensions.

Dans le cas des réacteurs nucléaires et plus particulièrement des réacteurs nucléaires à eau sous pression, il peut être nécessaire de réaliser la jonction par soudage de pièces de grandes dimensions telles que des conduites du circuit primaire. En particulier, il peut être nécessaire de réaliser de telles opérations de jonction par soudage, après un certain temps d'utilisation du réacteur, au cours duquel les conduites du circuit primaire ont acquis une radioactivité relativement forte.

On a par exemple proposé récemment, dans le but d'accroître la durée de vie d'une centrale nucléaire, de remplacer, par des générateurs de vapeur neufs, les générateurs de vapeur usagés d'un réacteur nucléaire à eau sous pression dont le faisceau de tubes est devenu défectueux, au cours d'une utilisation de longue durée.

Pour effectuer cette opération de remplacement d'un générateur de vapeur dans son ensemble, il est nécessaire en particulier d'effectuer la jonction par soudage des tubulures d'entrée et de sortie d'eau primaire du générateur de vapeur avec les conduites correspondantes du circuit primaire maintenues en attente dans le bâtiment du réacteur.

Le générateur de vapeur usagé nécessite pour son démontage le découpage de certaines parties des conduites primaires, au voisinage des tubulures partant de la boîte à eau. Après découpage, les extrémités des conduites sont réusinées et les tubulures du générateur neuf destiné à remplacer le générateur usagé sont prévues pour venir en concordance avec les conduites du circuit primaire qui ont été sectionnées et réusinées. Il faut alors effectuer la jonction par soudage des tubulures et des conduites qui ont une forte épaisseur qui peut être de l'ordre de 0,10 mètre et un grand diamètre pouvant aller jusqu'à une valeur proche d'un mètre. L'usinage de l'extrémité découpée de la conduite et de la tubulure permet de ménager entre elles un chanfrein de forme bien définie, ouvert vers l'extérieur et limité, vers l'intérieur, par deux parties d'accostage correspondantes qui sont fixées en place au début de l'opération de jonction par un soudage manuel.

Le chanfrein est ensuite rempli de métal d'apport, par passes successives, par soudage TIG orbital.

Dans le cas de la construction d'une centrale nucléaire, le raccordement des générateurs de vapeur au circuit primaire peut être effectué sur le site, sans difficultés majeures, l'opérateur surveillant et pilotant le dispositif de soudage orbital sur les lieux mêmes où est effectuée l'opération de soudage, c'est-à-dire dans la casemate du générateur de vapeur et ayant ainsi un contrôle direct sur l'opération de soudage. La qualité du joint de soudure qui est contrôlée de façon extrêmement sévère (aucun défaut ne peut être toléré) requiert donc l'intervention d'opérateurs hautement qualifiés dont l'attention doit être soutenue pendant tout le déroulement de la passe de soudage.

Le remplissage complet du chanfrein nécessite un grand nombre de cordons de soudure déposés chacun au cours d'une passe de soudage orbital tout autour du chanfrein. Pour effectuer la jonction d'une tubulure de générateur et d'une conduite du circuit primaire, il est actuellement nécessaire de déposer cent quatre-vingt cinq cordons de soudure, au cours du même nombre de passes de soudage orbital.

Dans le cas du changement d'un générateur de vapeur d'un réacteur ayant déjà fonctionné, les tubulures primaires sont fortement irradiées et il n'est plus possible de surveiller et de piloter l'opération de soudage orbital depuis un endroit proche de la conduite primaire.

On connaît des procédés de soudage TIG orbital automatique, par exemple tels que décrits dans le GB-A-2.173.316, qui pourraient théoriquement permettre d'effectuer la jonction par soudage de la tubulure et de la conduite du circuit primaire, sans la présence d'un opérateur dans la casemate du générateur de vapeur. Cependant, dans de tels procédés de soudage automatique, il est nécessaire de prérégler un grand nombre de paramètres de l'opération de soudage ou de prévoir des intervalles de variation acceptables de ces paramètres pour assurer le déroulement satisfaisant des passes successives. Au cours d'une opération de très longue durée, certains paramètres tels que la position de l'électrode par rapport au bain et par rapport au chanfrein doivent encore être surveillés et réglés en continu, en fonction d'un examen de la zone de soudage. Ce contrôle continu pourrait être fait théoriquement de façon automatique mais la commande du processus serait alors d'une trop grande complexité et nécessiterait l'utilisation de matériels extrêmement sophistiqués et extrêmement onéreux.

On a donc proposé de faire exercer une surveillance télévisuelle de la zone de soulage par un opérateur qui effectue à distance les corrections voulues d'un certain nombre de paramètres, grâce a un ensemble de télécommande.

Par exemple, dans le FR-A-2.412.380, on décrit un procédé de soudage semi-automatique dans lequel un opérateur effectue certaines tâches de surveillance et de commande depuis un poste de contrôle éloigné de la zone de soudage. Ces tâches consistent a fixer les paramètres du soudage en fonction de données fournies par une mémoire, à démarrer l'opération de soudage de manière manuelle, à modifier certains paramètres de soudage en fonction de l'image télévisuelle de la zone de soudage et à arrêter l'opération de soudage de manière manuelle, lorsque l'image observée correspond à la fin d'une passe.

Un tel procédé de soudage semi-automatique, dans le cas du raccordement de tubulures d'un générateur de vapeur aux conduites correspondantes du circuit primaire du réacteur, ne peut être mis en oeuvre de façon satisfaisante, pour la raison qu'il repose, en grande partie, en ce qui concerne la qualité de la soudure, sur le réglage de paramètres effectué en continu par un opérateur, à partir d'une image télévisuelle de la zone de soudage.

En effet, la conduite de l'opération de façon que le joint soudé ne présente aucun défaut reste possible tant que l'opérateur est réellement en présence de la zone de soudage et peut accéder directement aux moyens de réglage de certains paramètres du soudage. En revanche, dans le cas où la surveillance se fait sur une image télévisuelle, l'analyse de la zone en cours de soudage et la prise de décision quant aux paramètres à régler demandent un effort considérable et un entraînement spécial à l'opérateur.

En outre, dans le cas du remplissage d'un chanfrein de jonction d'une tubulure de générateur de vapeur par du métal d'apport, les paramètres de soudage relatifs à chacune des passes seront différents des paramètres de la passe effectuée immédiatement avant ou des paramètres de la passe qui sera effectuée immédiatement après. Les intervalles de réglage des paramètres contrôlés par l'opérateur sont également essentiellement variables d'une passe à une autre. Il devient donc très difficile, sinon impossible d'effectuer les réglages voulus au démarrage d'une passe de soudage et de contrôler de façon satisfaisante les paramètres réglables au cours de la passe de soudage.

Une certaine méthodologie du soudage de pièces de grandes dimensions et en particulier de canalisations par dépôt de métal dans un chanfrein, a bien sûr été élaborée mais la quantité d'informations nécessaires pour mener à bien l'opération de soudage est trop considérable pour être exploitée par un opérateur surveillant en continu le déroulement du soudage.

Dans le cas de la jonction de canalisations telles qu'une tubulure de générateur de vapeur et la conduite correspondante du circuit primaire un réacteur, le dépôt du métal d'apport est réalisé par couches successives, chacune des couches étant constituée par des cordons de soudage réalisés chacun au cours d'une passe tout autour du chanfrein annulaire et juxtaposés. Chaque passe, suivant la position du cordon correspondant dans le chanfrein, peut être rattachée à un type prédéfini qui permet de déterminer les paramètres de soudage. Ces paramètres dépendent donc en particulier du type de la passe et de la couche à laquelle appartient le cordon en cours de dépôt. Il est bien évident que la masse d'informations nécessaires pour mener à bien l'opération de soudage est considérable dans le cas d'une opération ne nécessitant pas moins de cent quatre-ving cinq cordons de soudure.

Le but de l'invention est donc de proposer un procédé de soudage semi-automatique commandé à distance, de deux pièces symétriques de révolution de grandes dimensions, par remplissage, avec un métal de soudure, d'un chanfrein annulaire, par passes successives de soudage orbital à arc sous gaz inerte permettant de constituer des couches de métal de soudure, dans le chanfrein, par juxtaposition de cordons de métal, chaque cordon déposé aucours d'une passe étant d'un type déterminé suivant sa position dans le chanfrein, dans lequel un opérateur assure une surveillance et une commande du soudage depuis un poste de contrôle situé à une certaine distance de la zone de soudage, en fixant les paramètres de soudage à partir d'informations stockées dans une mémoire, en démarrant les opérations de soudage de façon manuelle et à distance, en surveillant en permanence les opérations de soudage grâce à une visualisation à distance sur écran de télévision, de la zone de soudage, en modifiant éventuellement certains paramètres du soudage en fonction de l'image de la zone de soudage et en arrêtant de façon manuelle l'opération de soudage lorsque l'image apparue sur l'écran correspond à la fin d'une passe, ce procédé devant permettre à l'opérateur de surveiller et de commander à distance le déroulement du soudage, en prenant en compte sans difficulté la spécificité de chacune des passes successives effectuées.

Dans ce but,
— on fixe les paramètres de soudage pour chacune des passes de soudage en fonction du type de passe,
— on contrôle, avant de démarrer l'opération de soudage, que chacun des paramètres est fixé à une valeur convenable en fonction au type de passe, par interrogation de la mémoire,
— et on modifie les paramètres de soudage au cours d'une passe dans des limites prédéterminées et fournies à l'opérateur par interrogation de la mémoire.

Afin de bien faire comprendre l'invention, on va maintenant décrire à titre d'exemple non limitatif, en se référant aux figures jointes en annexe, un exemple de mise en oeuvre du procédé suivant l'invention, dans le cas du soudage d'une tubulure d'un générateur de vapeur sur une conduite du circuit primaire d'un réacteur nucléaire à eau sous pression.

Dans ces figures :
— la figure 1 est une vue en perspective éclatée du bâtiment du réacteur montrant le générateur de vapeur et la partie du circuit primaire sur laquelle on effectue le soudage ;
— la figure 2 est une vue en perspective de la tubulure du générateur de vapeur et de la conduite du circuit primaire, avant l'opération de soudage ;

— la figure 3 est une demi-vue en coupe longitudinale du chanfrein pendant l'opération de soudage ;

— la figure 4 est une vue en perspective de la machine de soudage utilisée ;

— la figure 5 est une vue de face d'une partie de la machine de soudage représentée à la figure 4 ;

— la figure 6 est une vue de dessus de la machine de soudage représentée à la figure 4 et montrant la torche de soudage et les moyens optiques de surveillance de la zone de soudage.

— la figure 7 est une vue de face d'une partie du poste de contrôle géré par l'opérateur ;

— la figure 8 est une vue de face du coffret de programmation des paramètres de soudage situé dans le poste de contrôle ;

— les figures 9, 10 et 11 sont des schémas fonctionnels montrant le déroulement des phases de détermination et de vérification des paramètres de soudage assistées par ordinateur.

Les figures 12 à 20 représentent l'écran tactile de l'ordinateur d'assistance à l'opérateur au cours de neuf phases différentes de la préparation du soudage et de l'opération de soudage elle-même.

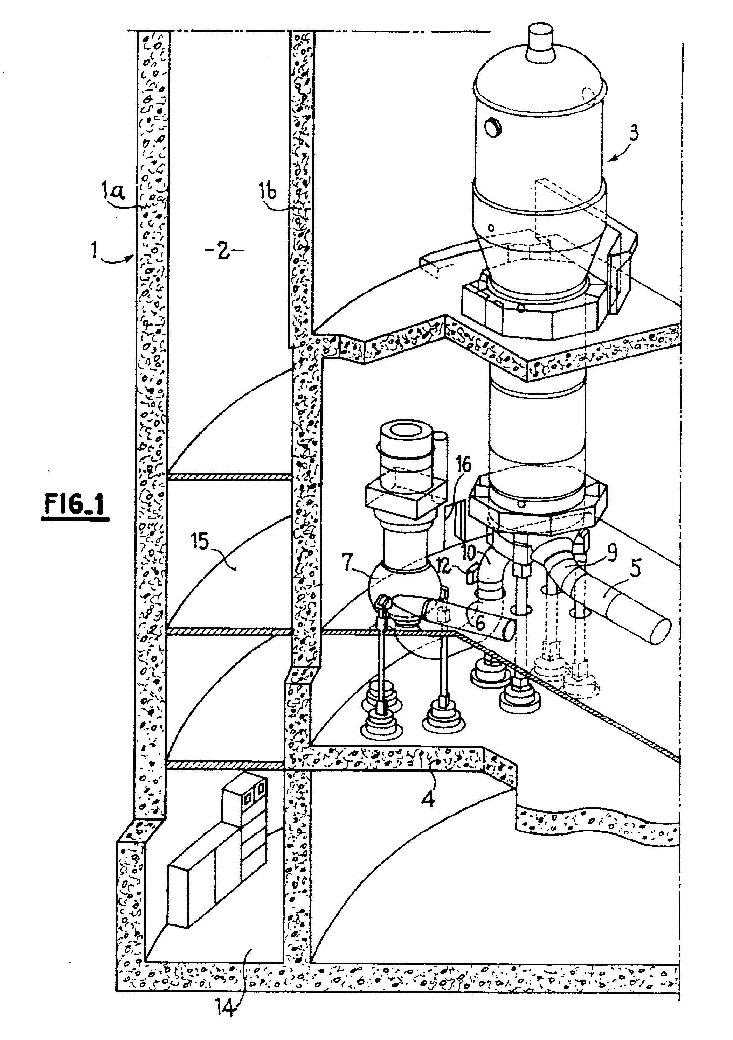

Sur la figure 1, on voit le bâtiment 1 d'un réacteur nucléaire à eau sous pression comportant deux enveloppes coaxiales 1a, 1b entre lesquelles est ménagé un espace annulaire 2. Un générateur de vapeur 3 du réacteur nucléaire est placé à l'intérieur de la seconde enveloppe 1b du bâtiment et repose par l'intermédiaire de colonnes de support sur un plancher intermédiaire 4. Le générateur de vapeur est relié aux conduites 5 et 6 du circuit primaire dans lesquelles circule l'eau sous pression du réacteur en direction ou en provenance de la cuve renfermant le coeur. La circulation est assurée grâce à une pompe primaire 7.

L'ensemble du réacteur comporte plusieurs boucles ayant chacune un échangeur de chaleur, une pompe primaire et des conduites de circulation de l'eau sous pression.

Sur la figure 1, le générateur de vapeur 3 représenté est un générateur neuf destiné à remplacer un générateur usagé qui a été précédemment démonté et sorti du bâtiment réacteur. Lors de ces opérations de démontage, les conduites 5 et 6 du circuit primaire ont été découpées pour les séparer des tubulures de sortie de la boîte à eau du générateur de vapeur usagé.

Après la mise en place du générateur de remplacement 3, on doit effectuer le soudage des tubulures 9 et 10 avec les conduites primaires 5 et 6 respectivement.

L'opération qui sera décrite est relative au soudage de la tubulure 10 et de la conduite primaire 6 dans une partie sensiblement verticale, c'est-à-dire avec un joint de soudure sensiblement horizontal.

Il est bien évident que l'opération de soudage, bien que non décrite, est également effectuée pour le raccordement de la tubulure 9 et de la conduite 5, avec un joint de soudure sensiblement vertical.

L'opération de soudage est contrôlée à distance, la conduite 6 qui est restée en contact avec le fluide primaire pendant toute l'utilisation du réacteur nucléaire présentant une activité relativement importante, même après une opération préalable de décontamination effectuée sur une longueur restreinte de l'ordre de 1 m.

Pour effectuer cette opération de soudage à distance, on utilise un dispositif de soudage TIG orbital 12 fixé sur les conduites 10, 6 dont on effectue la jonction. Le dispositif de soudage orbital 12 est commandé à distance depuis un poste de contrôle 14 situé au niveau inférieur du bâtiment du réacteur, dans l'espace annulaire 2. L'opérateur responsable du poste de contrôle 14 dispose de moyens de contrôle et de télécommande pour piloter le dispositif 12. Il dispose de plus d'une liaison téléphonique avec un poste 15 situé au niveau du plancher de la casemate du générateur de vapeur où est effectué le soudage. Dans ce poste, un ou plusieurs aides opérateurs sont disponibles pour intervenir à la demande dans la casemate du générateur de vapeur qui est accessible par un sas 16. L'aide opérateur peut être amené à intervenir sur le dispositif de soudage pour des opérations exceptionnelles telles que le changement de la bobine de fil d'apport ou de l'électrode du dispositif de soudage.

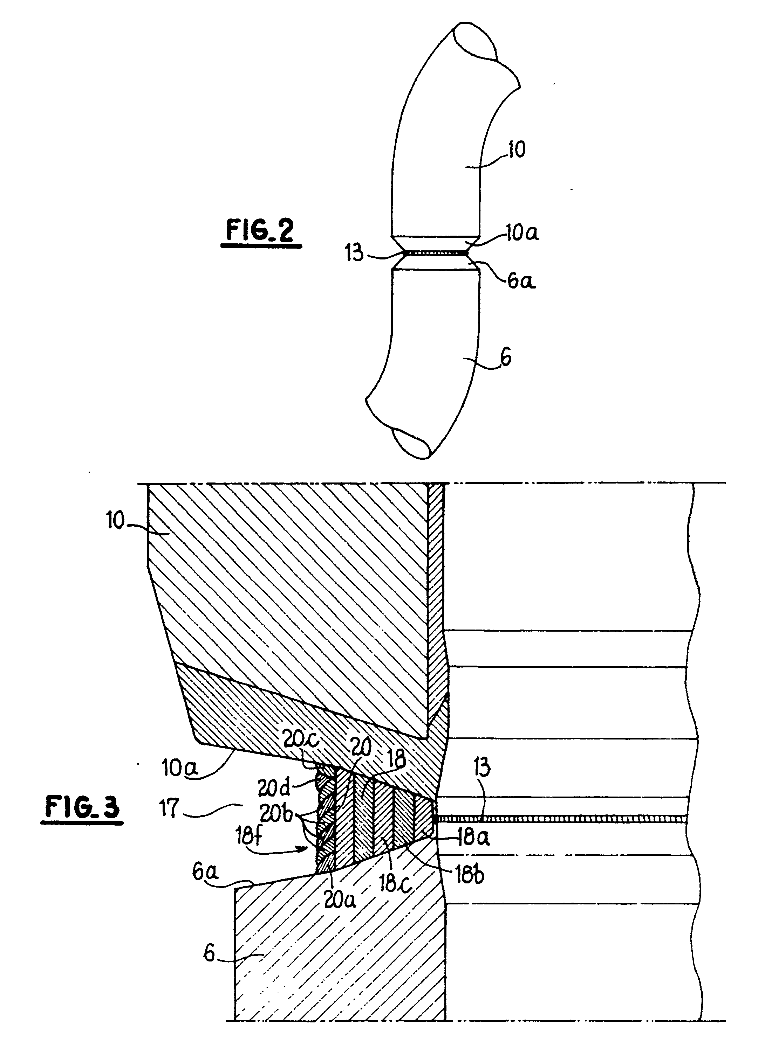

Sur la figure 2, on voit la tubulure 10 du générateur de vapeur dans sa position permettant son raccordement à la tuyauterie primaire 6. La tuyauterie primaire 6 a été usinée après son découpage, pour constituer un chanfrein 6a.

La tubulure 10 du générateur de vapeur présente à son extrémité un chanfrein 10a. La gorge dans laquelle on effectuera le dépôt du métal de soudure est délimitée par les chanfreins 6a et 10a des tubulures 6 et 10 amenées en coïncidence, au moment de la mise en place du générateur de vapeur 3 dans le bâtiment réacteur. La position relative de la tubulure 10 et de la conduite 6 est fixée grâce à un joint de soudure 13 effectué manuellement.

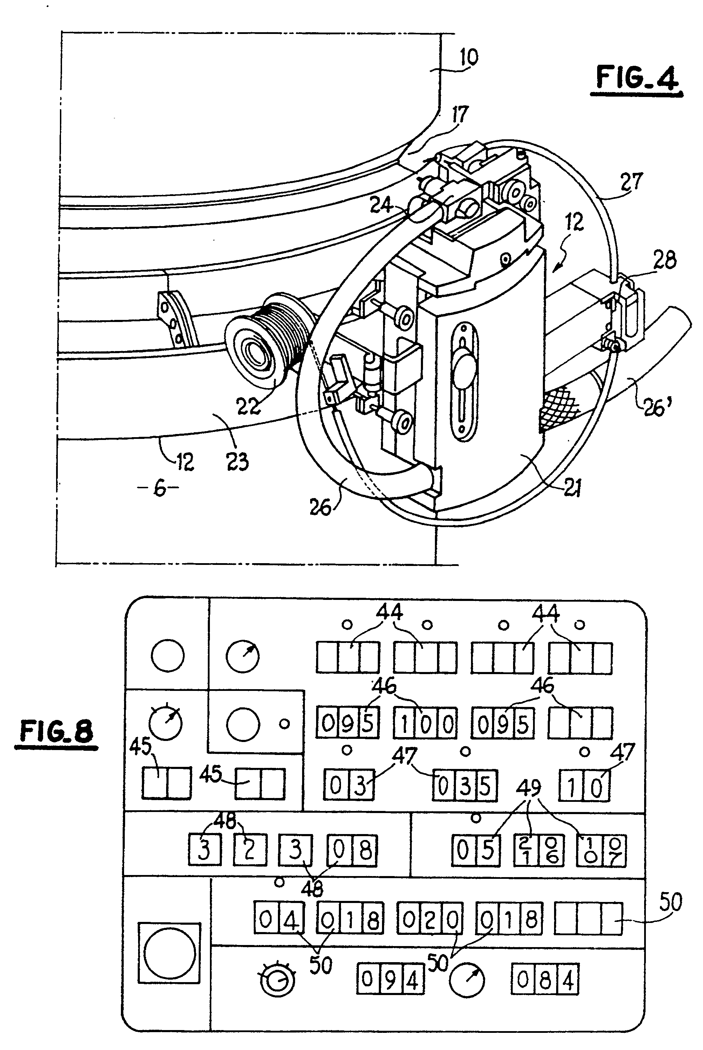

La machine de soudage permettant de remplir de métal d'apport la gorge 17 délimitée par les chanfreins 6a et 10a a été représentée sur les figures 4, 5 et 6. Cette machine de soudage de type orbital, à électrode de tungstène, et effectuant le dépôt de métal sous gaz inerte, d'un type tout-à-fait classique, permet de déposer des couches successives de métal d'apport 18 dans le chanfrein 17 (comme il est visible sur la figure 3). Les couches successives de métal d'apport 18a, 18b, 18c,... sont constituées chacune par la juxtaposition de cordons de soudure 20 annulaires et déposés chacun au cours d'une passe de soudage pendant laquelle le dispositif de soudage 12 effectue le tour complet des canalisations 6 et 10.

La dernière couche déposée 18f représentée sur la figure 3 est constituée par la juxtaposition de cordons de soudure 20 de quatre types différents 20a, 20b, 20c et 20d.

Dans le cas d'un joint de soudure horizontal joignant deux parties de conduite pratiquement verticales, le cordon de soudure 20a est déposé au cours de la première passe de soudage de la couche 18f correspondante, cette passe dans la partie basse du chanfrein 17 étant appelée passe de pied. Les cordons de soudage 20b sont déposés lors des passes de soudage suivantes appelées de passes de remplissage du chanfrein 17. Le cordon 20c est déposé dans la partie supérieure du chanfrein 17 au cours d'une passe de soudage appelée passe de plafond. Enfin, le cordon de soudage 20d est déposé en dernier lieu lors d'une passe appelée passe de consolidation destinée à remplir l'espace libre restant entre le dernier cordon 20b et le cordon de plafond 20c.

Les paramètres du soudage relatifs à une passe particulière dépendent de la position dans laquelle est effectué le soudage (joint de soudure horizontal, vertical ou incliné), de la position de la couche dans le chanfrein (le remplissage total du chanfrein est effectué à l'aide de quarante couches successives) et du type de passe déterminé suivant le processus décrit ci-dessus. Le nombre total de passes de soudage est de l'ordre de cent quatre-vingts. Il en résulte donc une très grande complexité du réglage de la machine de soudage.

La machine de soudage 12 comme représenté sur les figures 4 à 6 est d'un type classique et comporte un corps 21 motorisé et monté mobile sur un rail circulaire 23 fixé sur la conduite 6 légèrement en-dessous du chanfrein 17. Le corps 21 porte une tête de soudage 24 terminée du côté de chanfrein par une électrode de tungstène 25 et alimentée en courant électrique par des câbles passant dans une gaine 26. L'arc de soudage établi entre l'électrode 25 et la surface intérieure du chanfrein 17 permet la fusion d'un fil d'apport en une nuance adéquate amené dans la zone de soudage grâce à un tube de guidage 27 et à des moyens de déplacement 28. La réserve de fil d'apport est constituée par une bobine 22 fixée sur le corps 21. L'alimentation générale de la machine de soudage en courant électrique et en gaz inerte de protection est effectuée grâce à une gaine souple 26'.

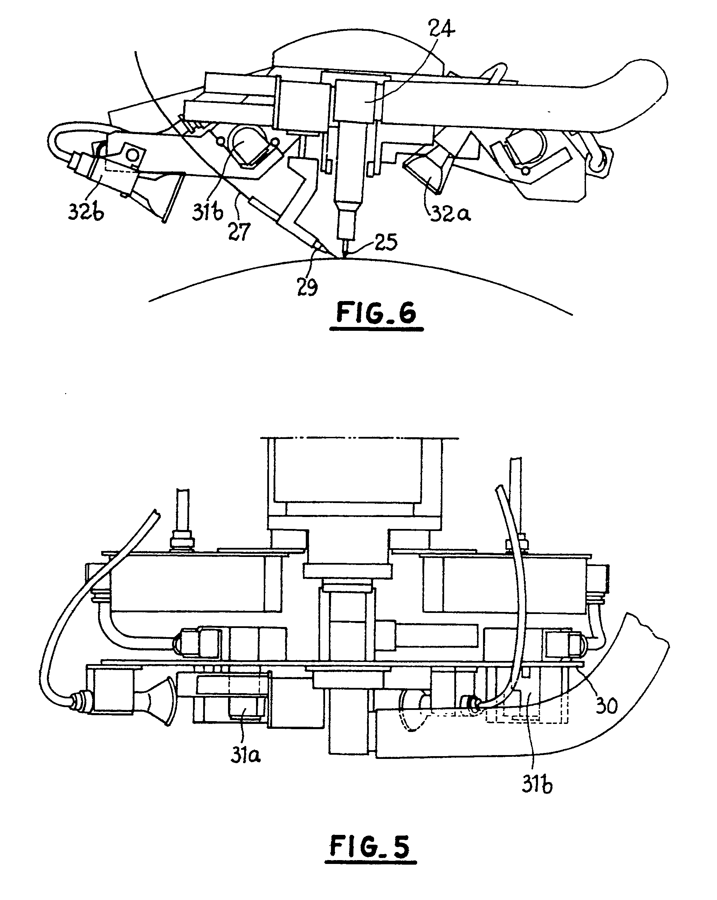

Pour son utilisation dans le procédé suivant l'invention, la machine de soudage classique a été équipée d'une platine 30 sur laquelle est montée la tête de soudage 24 et de part et d'autre de celle-ci, deux caméras vidéo 31a et 31b permettant de visualiser la zone de soudage, depuis deux positions situées respectivement à l'avant et à l'arrière de la zone de soudage si l'on considère le déplacement orbital de la machine de soudage 12. Les images fournies par les caméras 31a et 31b sont transmises au poste de contrôle 14 dans lequel l'opérateur assure la surveillance et le pilotage du soudage. Des moyens d'éclairage 32a et 32b sont adjoints aux caméras 31a et 31b respectivement, pour éclairer la zone de soudage dans laquelle le fil d'apport 29 est fondu par l'électrode 25 (figure 6).

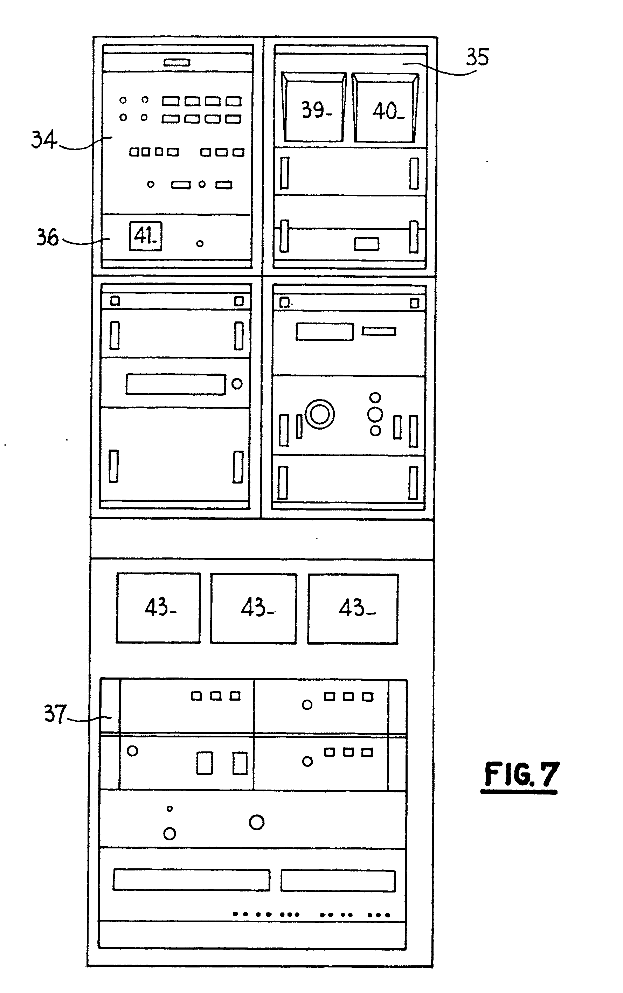

Sur la figure 7, on voit les principaux composants du poste de contrôle utilisés par l'opérateur pour surveiller et piloter le soudage. Ces éléments sont constitués par un coffret 34 de programmation et de commande à distance des paramètres de soudage, un ensemble de suivi vidéo et de liaison téléphonique 35, un ordinateur d'assistance à l'opérateur 36 associé à des mémoires renfermant toutes les données relatives au soudage et une baie vidéo de surveillance 37 permettant à l'opérateur d'avoir une vision complète de la zone de la casemate du générateur de vapeur dans laquelle est effectué le soudage.

Dans le poste de contrôle 14 est également placé le générateur de courant du dispositif de soudage (non représenté) associé à des armoires renfermant les composants de l'alimentation du générateur et équipées de divers témoins et interrupteurs.

Le coffret 34 de programmation et de commande du soudage permet d'afficher les paramètres relatifs à une passe de soudage et de transmettre des ordres correspondants, par télécommande, à la machine de soudage. Le coffret de programmation permet à l'opérateur aussi bien de fixer les paramètres prédéterminés au début d'une passe de soudage que de modifier les paramètres réglables, en cours de soudage.

Les écrans de visualisation 39 et 40 de l'ensemble vidéo 35 fournissent en continu à l'opérateur les images de la zone de soudage provenant des caméras 31a et 31b.

L'ordinateur d'assistance à l'opérateur 36 comporte un écran tactile 41 permettant à l'opérateur d'obtenir toute information nécessaire pour la détermination des paramètres de soudage au début d'une passe et pour le réglage de certains paramètres, en fonction de l'aspect de la zone de soudage apparaissant sur les écrans 39 et 40.

Enfin, les écrans 43 de l'ensemble de visualisation 37 permettent à l'opérateur d'avoir une vision complète du chantier de soudage, par exemple pour diriger et surveiller les procédures exceptionnelles effectuées par les aides-opérateurs dans la casemate du générateur de vapeur.

Parmi les paramètres de soudage, on peut distinguer les paramètres préréglés et les paramètres variables au cours d'une passe de soudage. Les paramètres préréglés peuvent être valables pour l'ensemble d'un joint soudé ou pour une passe de soudage seulement.

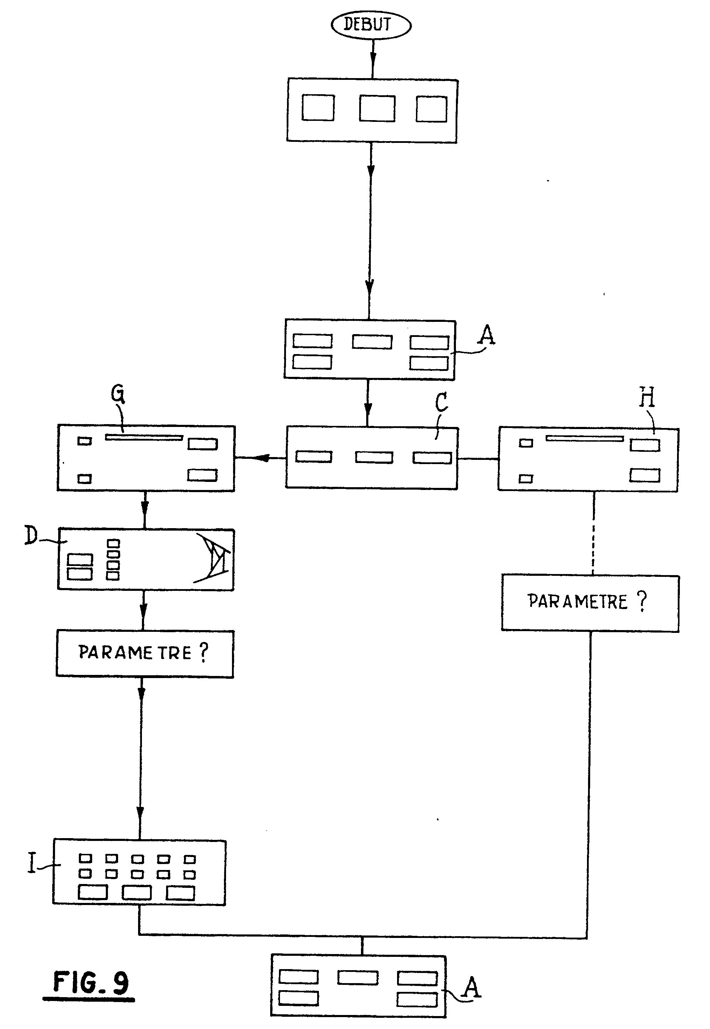

Les paramètres sont introduits dans le coffret de programmation 34 et transmis sous forme d'ordres à la tête de soudage 12 ; les valeurs de ces paramètres sont fournies et vérifiées par l'ordinateur d'assistance à l'opérateur 36. Les paramètres relatifs à une passe de soudage sont affichés, sous forme numérique, sur la face avant du coffret 34. La figure 8 montre un exemple d'affichage pendant une passe de soudage.

Le voyant 44 relatif à la séquence de soudage et les voyants 45 relatifs à la définition des pulsations du courant correspondent aux paramètres préréglés pour l'ensemble du joint soudé.

Les autres voyants sont relatifs aux paramètres de la passe de soudage à réaliser ou en cours de réalisation. Les voyants 46 permettent de fixer et d'afficher l'intensité pour chacune des séquences du soudage.

Les voyants 47 définissent les caractéristiques précises des pulsations du courant.

Les cadrans 48 donnent les caractéristiques du balayage de la tête de soudage.

Les cadrans 49 sont relatifs aux paramètres concernant le fil d'apport.

Les cadrans 50 concernent le déplacement de la machine de soudage.

D'autres cadrans ou commandes sont relatifs à la position de l'électrode par rapport au chanfrein.

En cours de soudage, l'opérateur peut également ajuster certains paramètres, par action à distance, au vu des images vidéo des écrans 39 et 40. Les paramètres réglables sont relatifs à la position de l'électrode par rapport au bain, ce qui définit la longueur de l'arc, à la position du fil d'apport dans la zone de soudage et au réglage fin des autres paramètres géométriques préréglés au début de la passe.

Dans tous les cas, le choix des paramètres ou leur réglage est fourni à l'opérateur par l'ordinateur 36 qui effectue également un contrôle des actions de l'opérateur, de la manière qui sera décrite ci-après.

Les figures 9, 10 et 11 représentent les séquences successives d'un dialogue de l'opérateur avec l'ordinateur d'assistance 36, pour la mise en mémoire des données relatives à toutes les procédures envisagées, avant le démarrage de l'installation, pour la préparation d'une passe de soudage et pour le lancement de l'opération de soudage elle-même, respectivement.

Chacune des étapes du dialogue entre l'opérateur et l'ordinateur est figurée par un rectangle représentant l'écran tactile 41 sur lequel sont affichés les éléments nécessaires au dialogue au cours de cette étape.

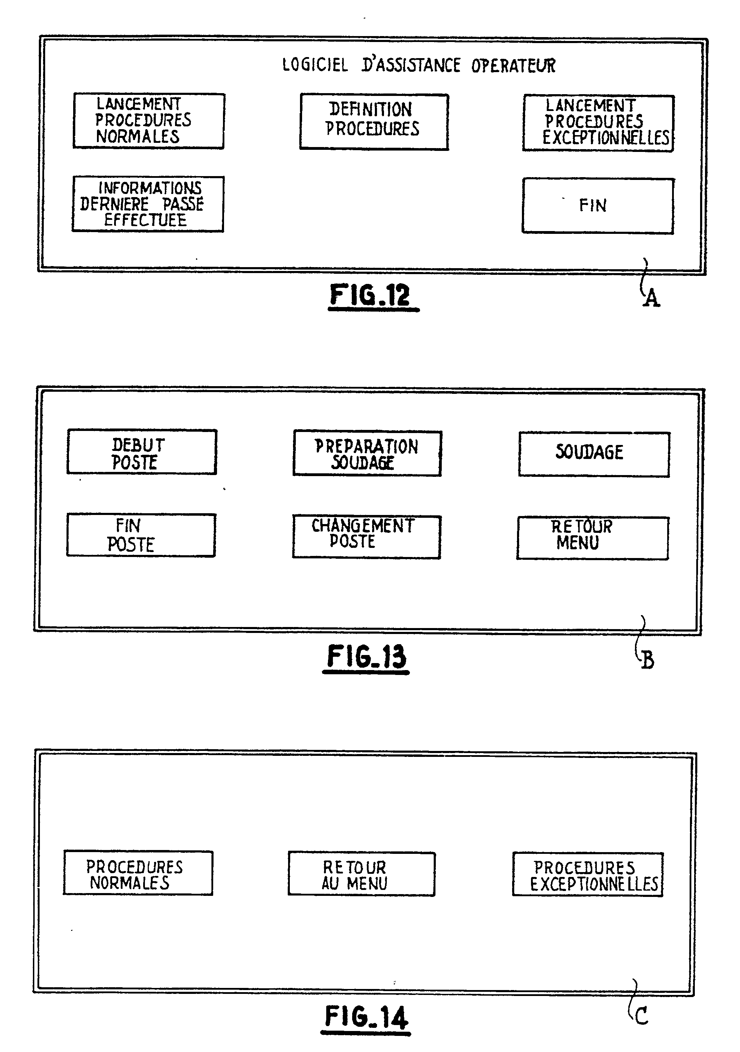

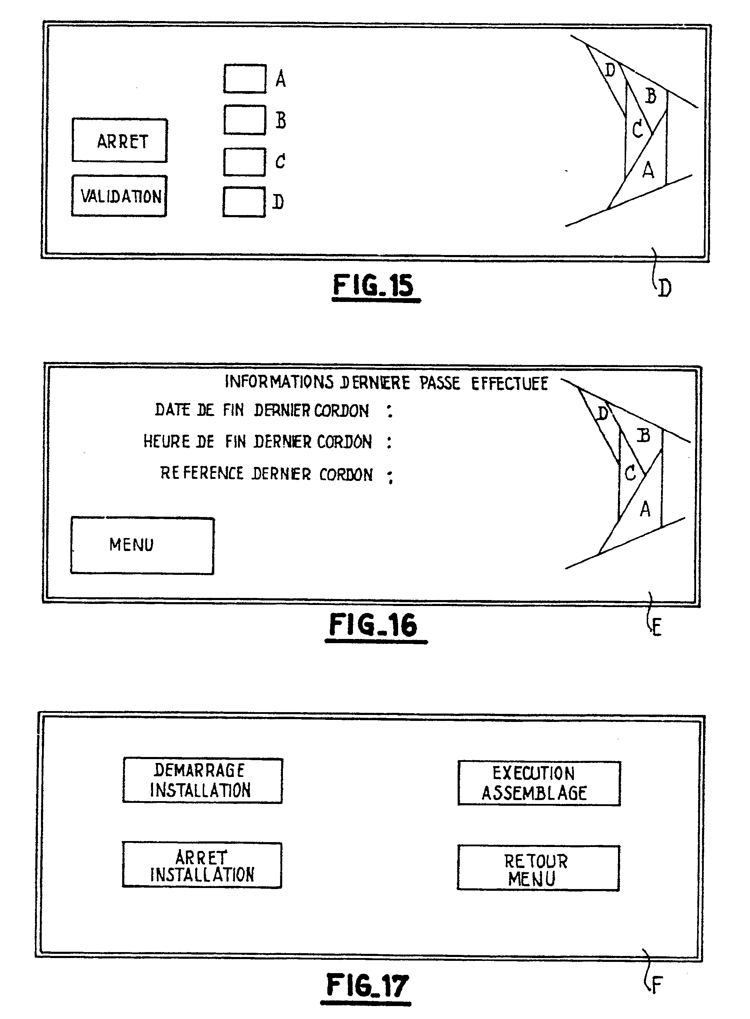

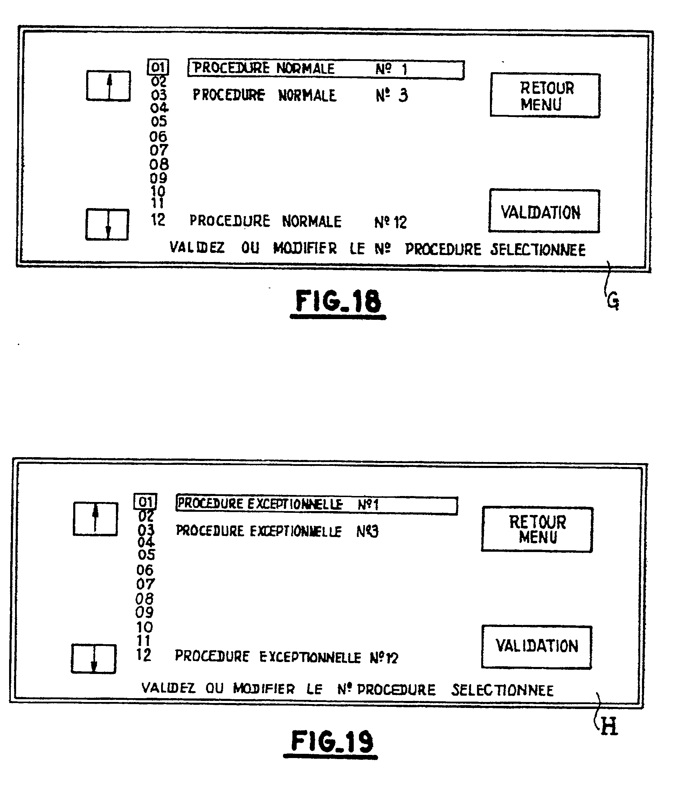

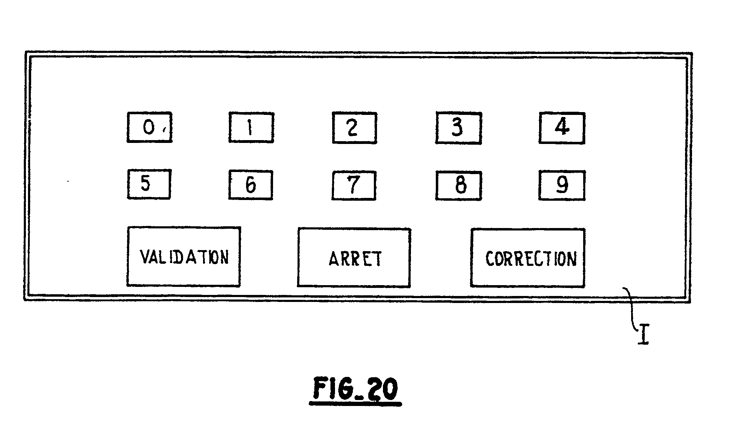

L'affichage sur l'écran tactile 41 peut prendre l'une des neuf formes représentées sur les figures 12 à 20. Les affichages ont été désignés par les lettres A, B, C, D, E, F, G, H et I. Les lettres correspondant à chacune des phases ont été associées aux rectangles successifs sur les figures 9, 10 et 11. Chacun des affichages permet soit de faire un choix de procédure ou de passe de soudage, soit d'entrer et d'afficher des données, soit encore d'obtenir par affichage des valeurs des paramètres de soudage et enfin de valider ces valeurs. L'opérateur agit par simple contact tactile sur l'écran dont les informations, comme il est visible sur les figures 12 à 21, sont exprimées sous une forme tout-à-fait explicite. L'ordinateur d'assistance à l'opérateur peut donc être utilisé sans difficulté par un personnel n'ayant reçu aucune formation dans le domaine de l'informatique.

Sur la figure 9, on a représenté la séquence permettant d'entrer dans la mémoire de l'ordinateur, les valeurs des paramètres intervenant dans les procédures normales et exceptionnelles mises en oeuvre dans une opération de soudage.

Cette séquence est effectuée avant le démarrage de l'installation et repose sur les données connues pour des installations et des opérations similaires.

Après avoir chargé le logiciel, on fait apparaître une première interrogation concernant la position du joint soudé (verticale, horizontale ou inclinée).

L'écran fait alors apparaître un tableau du type A (figure 12) permettant d'afficher le menu principal du logiciel. L'utilisateur peut alors par action tactile sur une des cases voir apparaître l'étape suivante : soit enregistrement des procédures, soit lancement de l'opération, soit l'information sur le travail en cours.

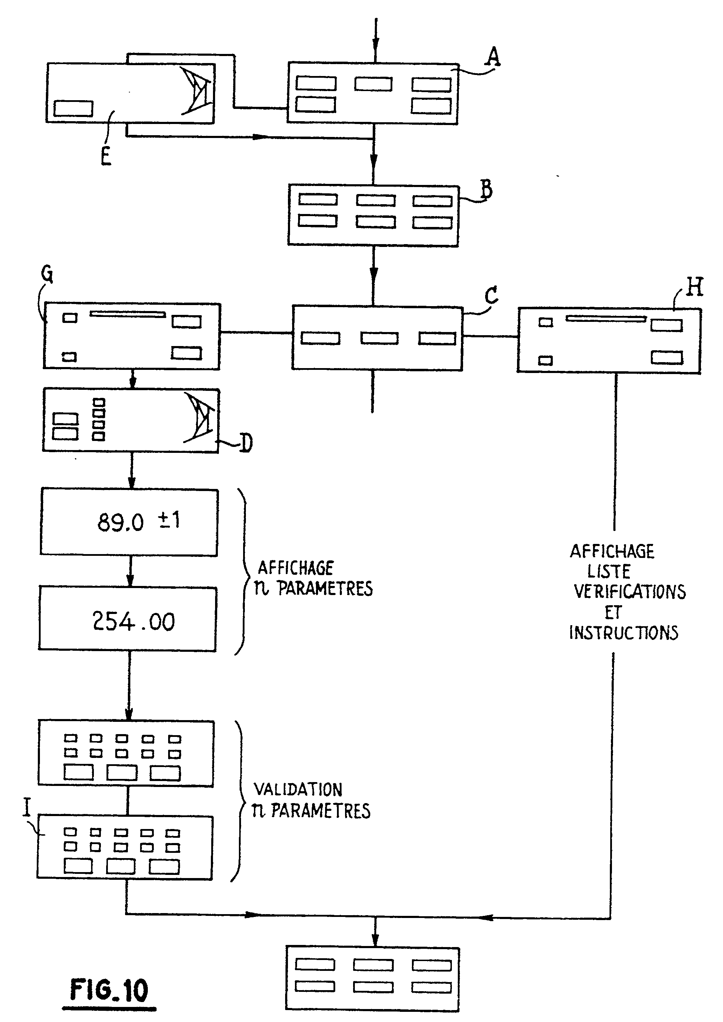

Dans le cas de la séquence de la figure 10, l'étape suivante est un tableau du type C permettant de choisir la définition des procédures normales ou exceptionnelles. Dans l'un et l'autre cas, la procédure est choisie et désignée (tableau G). Le type de passe de soudage est alors désigné (tableau D). Les différents paramètres du soudage apparaissent alors successivement et sont affichés sur un tableau numérique du type I. On revient alors à un tableau du type A permettant à nouveau de choisir la définition des procédures.

On opère donc par entrées successives de tous les paramètres concernant toutes les procédures choisies.

La figure 10 représente une séquence mise en oeuvre pour la préparation du soudage, avant le démarrage d'une passe.

Le premier tableau de type A permet d'obtenir les informations sur la dernière passe effectuée en faisant apparaître le tableau du type E et retour au menu (type A) ; en faisant ensuite apparaître le menu (tableau B), on peut alors choisir la procédure de préparation du soudage. On fait alors le choix des procédures normales qui apparaissent sur l'écran (tableau G) ; après avoir fait le choix d'une procédure normale, le tableau D apparaît permettant de faire le choix d'un type de passe de soudage. Ce choix étant fait, les différents paramètres du soudage apparaissent pour être entrés dans le coffret de programmation du soudage. Les paramètres entrés doivent alors être validés par l'ordinateur (tableau I). Pour cela, le logiciel compare la valeur affichée avec la valeur mémorisée. S'il y a identité entre les deux valeurs, la validité est confirmée. S'il apparaît une différence, un message d'avertissement est délivré à l'opérateur. Si la valeur choisie par l'opérateur se trouve dans la tolérance admise pour le paramètre, il s'agit d'un simple avertissement sans conséquence sur la validation alors que si la valeur du paramètre se trouve en dehors de la tolérance, il n'y a pas validation. Le démarrage de l'installation ne peut alors avoir lieu. Il en est de même pour les paramètres dont on effectue la modification en cours de soudage, l'ordinateur d'assistance fournissant à l'opérateur l'intervalle dans lequel le paramètre peut être modifié. Cette modification résulte de la surveillance par l'opérateur des écrans de visualisation de la zone de soudage. Les actions correctrices de l'opérateur qui concernent en particulier la position de l'électrode et du fil d'apport restent donc toujours dans les limites permises et l'on évite ainsi des actions intempestives.

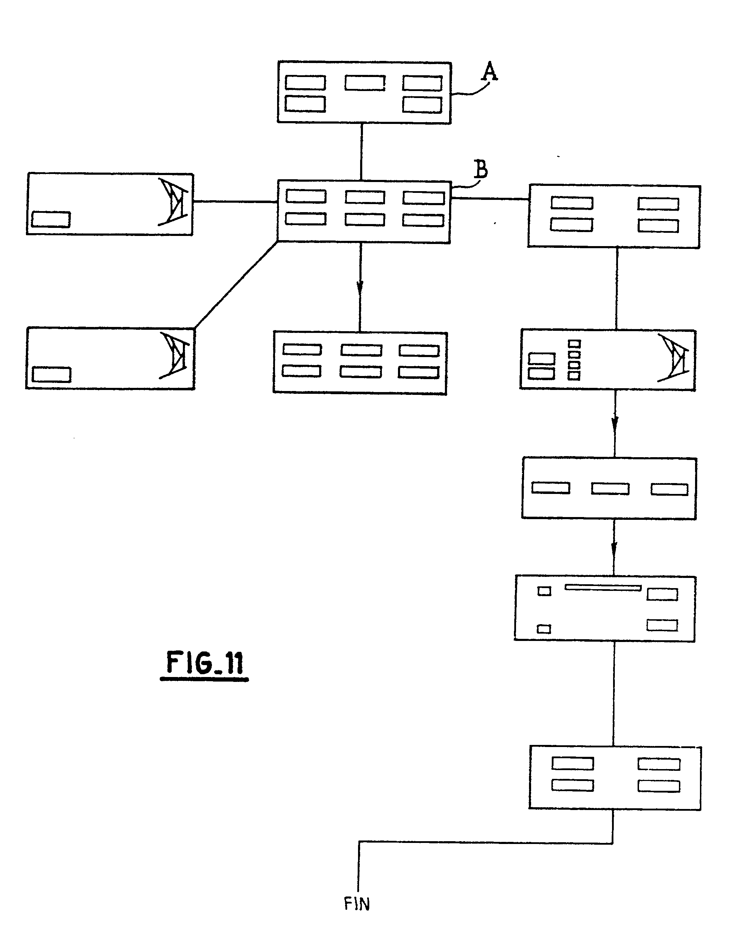

Comme il est visible sur la figure 11, après la séquence de préparation du soudage, l'opération proprement dite peut démarrer, à moins qu'un arrêt d'urgence n'intervienne ; l'ordinateur affiche alors le menu procédure exceptionnelle.

La passe de soudage se déroule jusqu'au moment où l'opérateur observe sur les écrans de visualisation la fin d'une passe.

Dans le cas d'un travail par poste, ce qui est toujours le cas pour des opérations de longue durée comme le soudage de tubulures de générateurs de vapeur, l'opérateur doit consulter en début de poste les informations sur la dernière passe effectuée lors du poste précédent. En fin de poste, l'opérateur enregistre les données nécessaires à l'information de son successeur.

Le procédé suivant l'invention permet donc de réaliser des opérations de soudage complexes de façon que les paramètres du soudage soient toujours définis de façon sûre et précise et en évitant tout risque d'erreur. D'autre part, le procédé permet de contrôler et de commander le soudage en continu et à distance, sans risque d'erreurs pouvant provenir d'une mauvaise appréciation de l'aspect de la zone de soudage.

Tous ces résultats sont obtenus par des moyens dont la complexité et le coût sont limités grâce à une intervention manuelle fondée sur l'observation visuelle et contrôlée par des moyens automatiques.

L'invention ne se limite pas au mode de réalisation qui a été décrit.

C'est ainsi que les dispositifs de commande, les moyens informatiques et les dispositifs d'affichage peuvent être différents de ceux qui ont été décrits.

En outre, le procédé de soudage suivant l'invention peut s'appliquer dans d'autres domaines que le soudage de conduites pour le remplacement d'un générateur de vapeur d'un réacteur nucléaire à eau sous pression. Le procédé peut s'appliquer au soudage de toute canalisation nécessitant une action à distance et plus généralement au soudage de toute pièce de révolution dans des domaines de l'industrie tels que l'industrie nucléaire, l'industrie chimique ou pétrochimique.

## Revendications

1. Procédé de soudage semi-automatique commandé à distance, de deux pièces (6, 10) symétriques de révolution de grandes dimensions, par remplissage avec un métal de soudure, d'un chanfrein annulaire (17) par passes successives (20) de soudage orbital à arc sous gaz inerte permettant de constituer des couches de métal de soudure (18) dans le chanfrein (17) par juxtaposition de cordons de métal (18), chaque cordon déposé au cours d'une passe étant d'un type déterminé, suivant sa position dans le chanfrein (17), dans lequel un opérateur assure une surveillance et une commande du soudage depuis un poste de contrôle (14) situé à une certaine distance de la zone de soudage, en fixant les paramètres de soudage à partir d'informations stockées dans une mémoire, en démarrant les opérations de soudage de façon manuelle et à distance, en surveillant en permanence les opérations de soudage grâce à une visualisation à distance sur écran de télévision (39, 40) de la zone de soudage, en modifiant éventuellement certains paramètres du soudage en fonction de limage de la zone de soudage et en arrêtant de façon manuelle l'opération de soudage lorsque l'image apparue sur l'écran correspond à la fin d'une passe, caractérisé par le fait :

  — qu'on fixe les paramètres de soudage pour chacune des passes de soudage en fonction du type de passe,

  — qu'on contrôle, avant de démarrer l'opération de soudage, que chacun des paramètres est fixé à une valeur convenable en fonction du type de passe, par interrogation de la mémoire,

  — et qu'on modifie les paramètres de soudage au cours d'une passe dans des limites prédéterminées et fournies à l'opérateur par interrogation de la mémoire.

2. Procédé de soudage suivant la revendication 1, caractérisé par le fait que les valeurs des paramètres pour une passe de soudage et les limites dans lesquelles les paramètres peuvent être modifiés en cours de soudage sont fournies à l'opérateur par un ordinateur (36) comportant un écran tactile (41) permettant un dialogue entre l'opérateur et l'ordinateur (36).

3. Procédé de soudage suivant la revendication 2, caractérisé par le fait que le contrôle de la valeur des paramètres est effectué par l'ordinateur (36) de façon qu'un signal d'avertissement soit affiché sur son écran (41) dans le cas où un paramètre choisi par l'opérateur a une valeur différente de la valeur prévue.

4. Procédé de soudage suivant la revendication 3, caractérisé par le fait que l'ordinateur (36) commande un blocage du démarrage de l'opération de soudage, lorsqu'une valeur d'un paramètre choisi par l'opérateur se trouve en dehors de limites prédéterminées.

5. Utilisation d'un procédé suivant l'une quelconque des revendication 1 à 4, pour le soudage de deux pièces (6, 10) constituées respectivement par une conduite primaire d'un réacteur nucléaire à eau sous pression et par une tubulure de raccordement d'un générateur de vapeur de ce réacteur nucléaire.

## Patentansprüche

1. Ferngesteuertes halbautomatisches Schweißverfahren von zwei rotationssymmetrischen Teilen (6, 10) von großen Abmessungen, durch Füllen mit einem Schweißmetall eines ringförmigen Schweißspalts (17) durch aufeinanderfolgende Arbeitsgänge (20) von Orbitalbogenschweißen unter Inertgas, was die Bildung von Metallschweißschichten (18) in dem Schweißspalt (17) durch Aneinanderlegen von Metallwulsten (18) erlaubt, wobei jeder während eines Arbeitsgangs aufgebrachte Wulst von einem vorbestimmten Typ ist, gemäß seiner Stellung in dem Schweißspalt (17), bei dem eine Bedienungsperson die Überwachung und die Schweißsteuerung von einem Bedienungsstand (14) aus überwacht, der in einem bestimmten Abstand von der Schweißzone entfernt ist, unter Einstellen der Schweißparameter, ausgehend von in einem Speicher gespeicherten Informationen, unter Beginnen der Schweißvorgänge auf manuelle Art und im Abstand unter ständiger Beobachtung der Schweißvorgänge dank einer im Abstand befindlichen Visualisierung auf einem Fernsehschirm (39, 40) der Schweißzone unter gegebenenfalls Ändern gewisser Schweißparameter in Abhängigkeit des Bildes der Schweißzone und unter Beenden auf manuelle Art des Schweißvorgangs, wenn das auf dem Bildschirm erscheinende Bild dem Ende eines Arbeitsganges entspricht, **dadurch gekennzeichnet :**
daß die Schweißparameter für einen jeden der Schweißarbeitsgänge in Abhängigkeit des Typs der Arbeitsvorgangs festgelegt werden,
daß vor dem Beginn des Schweißvorgangs überprüft wird, daß jeder der Parameter auf einen geeigneten Wert festgelegt wird in Abhängigkeit des Typs des Arbeitsvorgangs durch Abfrage des Speichers, und
daß die Schweißparameter während eines Arbeitsvorgangs in vorbestimmten und durch Abfrage des Speichers der Bedienungsperson gelieferten Grenze modifiziert werden.

2. Schweißverfahren nach Anspruch 1, **dadurch gekennzeichnet,** daß die Werte der Parameter für einen Schweißarbeitsgang und die Grenzen, in denen die Parameter während des Schweißens geändert werden können, der Bedienungsperson durch einen Rechner (36) geliefert werden, der einen Tastbildschirm (41) aufweist, der einen Dialog zwischen der Bedienungsperson und dem Rechner (36) erlaubt.

3. Schweißverfahren nach Anspruch 2, **dadurch gekennzeichnet,** daß die Steuerung des Wertes der Parameter mittels des Rechners (36) derart durchgeführt wird, daß ein Warnsignal auf seinem Bildschirm (41) in dem Fall angezeigt wird, wo ein durch die Bedienungsperson ausgewählter Parameter einen zum vorgesehenen Wert unterschiedlichen Wert aufweist.

4. Schweißverfahren nach Anspruch 3, **dadurch gekennzeichnet,** daß der Rechner (36) ein Blockieren des Anfangs des Schweißvorgangs steuert, wenn sich ein Wert des durch die Bedienungsperson ausgewählten Parameters außerhalb der vorbestimmten Grenzen befindet.

5. Anwendung eines Verfahrens nach einem der Ansprüche 1 bis 4 für das Schweißen von zwei Teilen (6, 10), die von einer Primärleitung eines Druckwasserkernreaktors bzw. von einem Verbindungsrohrstutzen eines Dampfgenerators dieses Kernreaktors gebildet werden.

## Claims

1. Process for the remote-controlled semiautomatic welding of two large-size rotationally symmetrical components (6, 10) by filling an annular chamfer (17) with a welding metal in successive orbital-arc welding passes (20) under inert gas, making it possible to form layers of welding metal (18) in the chamfer (17) by placing metal beads (18) next to one another, each bead deposited during a pass being of a specific type depending on its position in the chamfer (17), in which an operator monitors and controls the welding from a control post (14) located some distance from the welding zone, fixing the welding parameters on the basis of information stored in a memory, starting the welding operations manually and by remote control, whilst continuously monitoring the welding operations by means of a remote display of the welding zone on a television screen (39, 40), modifying certain welding parameters if need be in accordance with the image of the welding zone and manually stopping the welding operation when the image appearing on the screen corresponds to the end of a pass, characterised in that :
— the welding parameters are fixed for each of the welding passes depending on the type of pass ;
— before the welding operation is started a check is made that each parameter is set to a suitable value depending on the type of pass, by interrogating the memory ;
— and the welding parameters are modified during a pass within predetermined limits supplied to the operator by interrogation of the memory.

2. Welding process according to claim 1, characterised in that the values of the parameters for a welding pass and the limits within which the parameters can be modified during the welding are supplied to the operator by a computer (36) having a touch screen (41) which allows dialogue between the operator and the computer (36).

3. Welding process according to claim 2, characterised in that the value of the parameters is monitored by the computer (36) so that a warning signal comes up on its screen (41) if a parameter selected by the operator has a value different from the intended value.

4. Welding process according to claim 3, characterised in that the computer (36) orders a block on the starting of the welding operation if a value of a parameter selected by the operator is outside predetermined limits.

5. Use of a process according to any one of claims 1 to 4, for welding two components (6, 10) consisting, respectively, of a primary duct of a pressurised-water nuclear reactor and a connecting tube for a steam generator of this nuclear reactor.

**FI6.1**

FIG.2

FIG.3

FIG.4

FIG.8

**FIG. 6**

**FIG. 5**

**FIG. 7**

EP 0 278 800 B1

FIG. 9

89.0 ±1

254.00

AFFICHAGE
n PARAMETRES

VALIDATION
n PARAMETRES

AFFICHAGE
LISTE
VERIFICATIONS
ET
INSTRUCTIONS

**FIG.10**

FIG.11

LOGICIEL D'ASSISTANCE OPERATEUR

| | | |
|---|---|---|
| LANCEMENT PROCEDURES NORMALES | DEFINITION PROCEDURES | LANCEMENT PROCEDURES EXCEPTIONNELLES |
| INFORMATIONS DERNIERE PASSE EFFECTUEE | | FIN |

**FIG.12**

A

| | | |
|---|---|---|
| DEBUT POSTE | PREPARATION SOUDAGE | SOUDAGE |
| FIN POSTE | CHANGEMENT POSTE | RETOUR MENU |

**FIG.13**

B

| | | |
|---|---|---|
| PROCEDURES NORMALES | RETOUR AU MENU | PROCEDURES EXCEPTIONNELLES |

**FIG.14**

C

A
B
C
D

ARRET

VALIDATION

**FIG.15**

D

INFORMATIONS DERNIERE PASSE EFFECTUEE

DATE DE FIN DERNIER CORDON :

HEURE DE FIN DERNIER CORDON :

REFERENCE DERNIER CORDON :

MENU

**FIG.16**

E

DEMARRAGE
INSTALLATION

EXECUTION
ASSEMBLAGE

ARRET
INSTALLATION

RETOUR
MENU

**FIG.17**

F

| 01 | PROCEDURE NORMALE | N° 1 |
| 02 | | |
| 03 | PROCEDURE NORMALE | N° 3 |
| 04 | | |
| 05 | | |
| 06 | | |
| 07 | | |
| 08 | | |
| 09 | | |
| 10 | | |
| 11 | | |
| 12 | PROCEDURE NORMALE | N° 12 |

RETOUR MENU

VALIDATION

VALIDEZ OU MODIFIER LE N° PROCEDURE SELECTIONNEE

## FIG. 18

G

| 01 | PROCEDURE EXCEPTIONNELLE | N°1 |
| 02 | | |
| 03 | PROCEDURE EXCEPTIONNELLE | N°3 |
| 04 | | |
| 05 | | |
| 06 | | |
| 07 | | |
| 08 | | |
| 09 | | |
| 10 | | |
| 11 | | |
| 12 | PROCEDURE EXCEPTIONNELLE | N°12 |

RETOUR MENU

VALIDATION

VALIDEZ OU MODIFIER LE N° PROCEDURE SELECTIONNEE

## FIG. 19

H

20

FIG_20